# EUROPEAN PATENT SPECIFICATION

(11) **EP 0 639 821 B1**
(45) Date of publication and mention of the grant of the patent: **10.11.1999**
(21) Application number: 94401861.3
(22) Date of filing: 16.08.1994
(51) Int. Cl.: G08B 5/22

(54) **Radio paging receiver for announcing an unconfirmed message full state of a message memory**
Den vollen Zustand des Speichers für ungelesene Nachrichten anzeigenden Funkrufempfänger
Récepteur d'appel radio pour signaler l'état plein de la mémoire pour messages non lus

(30) Priority: 17.08.1993 JP 20315893
(43) Date of publication of application: 22.02.1995
(73) Proprietor: NEC CORPORATION, Tokyo (JP)
(72) Inventor: Shima, Makoto, c/o NEC Corporation, Tokyo (JP); Uchida, Jun, c/o NEC Shizuoka, Ltd., Kakegawa-shi, Shizuoka (JP)
(74) Representative: Dubois-Chabert, Guy

(56) References cited:
- EP-A- 0 261 417
- GB-A- 2 116 342
- US-A- 4 851 829

## Description

### Background of the Invention:

This invention relates to a radio paging receiver and, in particular, to a radio paging receiving having a message display function.

One of conventional radio paging receivers of the type described is disclosed in Japanese Utility Model Prepublication No. 92243/1990 (Title of Invention: Paging Receiver with Message Receiving Function). The radio paging receiver disclosed therein has a function of protecting unconfirmed messages memorized in a first or main memory area of a message memory of, for example, an RAM (random access memory) until a possessor of the radio paging receiver confirms the unconfirmed message under consideration. The unconfirmed message is a message which is not yet confirmed by the possessor. For this purpose, the radio paging receiver comprises in the message memory, in addition to the first memory area for successively memorizing a plurality of received messages, a second or subsidiary memory area for memorizing an oldest reception unconfirmed message among the unconfirmed messages that is erased from the first memory area. When the oldest reception unconfirmed message is transferred from the first memory area to the second memory area and is thereby memorized in the second memory area, this is announced for a predetermined time interval.

In the above-mentioned conventional radio paging receiver, the reception message must be transferred from the first memory area to the second memory area when the first memory area has no vacant or empty area (that is, the first memory area is put in a full state in which the first memory area is filled with the reception messages), in order to prevent erasure of any unconfirmed message before it is confirmed. Necessity of the second memory area and a transfer function of the reception message from the first memory area to the second memory area results in a complicated structure and an increased cost of the radio paging receiver.

In the above-mentioned radio paging receiver, a confirmed message may possibly be erased even if it is protected as a protected message (with a protected attribute).

### Summary of the Invention:

It is therefore an object of this invention to remove the disadvantages of the conventional radio paging receiver and to provide a radio paging receiver of a simple structure which can assure that any unconfirmed message before confirmed by a possessor is never overwritten or updated by a newly-received message.

It is another object of this invention to provide a radio paging receiver of the type described, which can acknowledge that a message memory is filled with unconfirmed messages except protected messages.

Other objects of this invention will become clear as the description proceeds.

US 4 851 829 discloses a paging receiver with alert indicating status of memory.

According to this invention, there is provided a radio paging receiver comprising: receiving means for receiving a radio signal comprising a message and destined to the receiver and for producing the message as a received message; a message memory having a plurality of message areas; storing means for storing the received message in one of the message areas as an unconfirmed message; announcing means for carrying out a call announcement in response to the received message to announce reception of the received message; instruction producing means for producing an announcement stop instruction; first detecting means connected to the announcing means and the instruction producing means for detecting whether or not the announcement stop instruction is received within a predetermined time interval from a first time instant at which the announcing means begins to carry out the call announcement; first control means connected to the announcing means and the first detecting means for controlling, when the first detecting means detects that the announcement stop instruction is received within the predetermined time interval, the announcing means and the message memory so that the announcing means stops the call announcement and that the message memory memorizes the received message in the one of the message areas as a confirmed message instead of the unconfirmed message; second detecting means connected to the message memory and the first detecting means for detecting that each of the message areas is filled with the unconfirmed message when the first detecting means does not detect that the announcing stop instruction is received within the predetermined time interval; and second control means connected to the announcing means and the second detecting means for controlling, when the second detecting means detects that each of the message areas is filled with the unconfirmed message, the announcing means to make the announcing means announce an unconfirmed message full announcement instead of the call announcement. The unconfirmed message full announcement has a different announcing pattern which is different from that of the call announcement.

### Brief Description of the Drawing:

Fig. 1 is a block diagram of a radio paging receiver according to an embodiment of this invention;
Fig. 2 is a diagram for use in describing operation of a message memory of the radio paging receiver illustrated in Fig. 1;
Fig. 3 is a time chart for use in describing announcing operation of the radio paging receiver illustrated in Fig. 1;
Figs. 4(a) and 4(b) collectively show a flow chart for use in describing operation of the radio paging receiver illustrated in Fig. 1; and
Fig. 5 is a flow chart for use in describing another operation of the radio paging receiver illustrated in Fig. 1.

### Description of Preferred Embodiment:

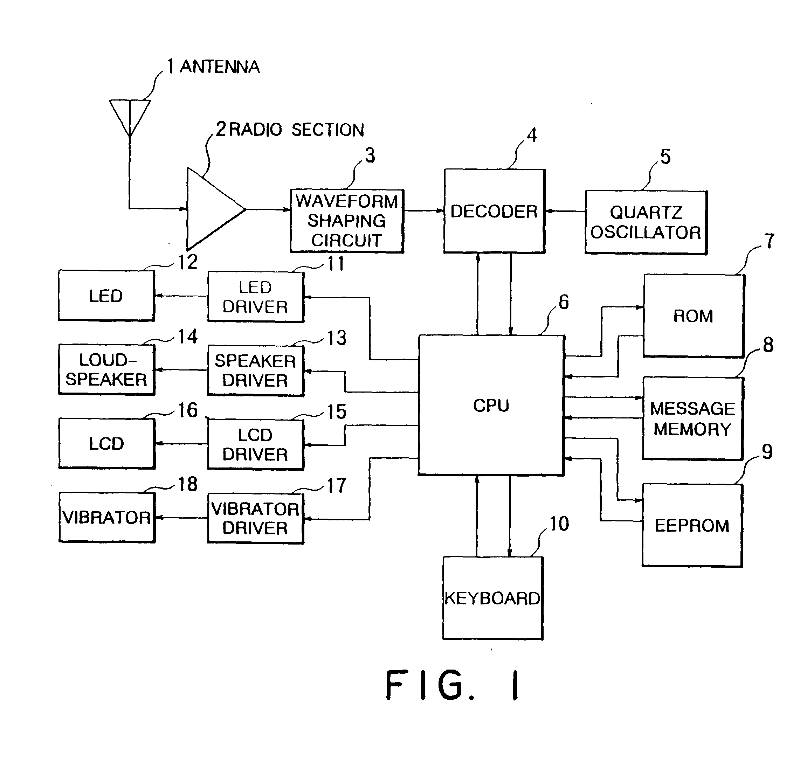

Referring to Fig. 1, a radio paging receiver according to a preferred embodiment of this invention has a display function. A radio signal is received by an antenna 1 to be amplified and demodulated in a radio section 2. A demodulated signal demodulated by the radio section 2 is converted by a waveform shaping circuit 3 into a converted signal having a waveform so that a decoder 4 can deal with the converted signal. The decoder 4 takes in the converted signal in synchronism with a succession of reference clocks generated by a quartz oscillator 5. A CPU (central processing unit) 6 compares a call number in the demodulated signal with an address number assigned to the receiver and preliminarily memorized in an EEPROM (electrically erasable programmable read-only memory) 9. When coincidence between the call number and the address number is confirmed, the CPU 6 further takes in a received message which follows the call number in the converted signal. A call announcing operation is then started.

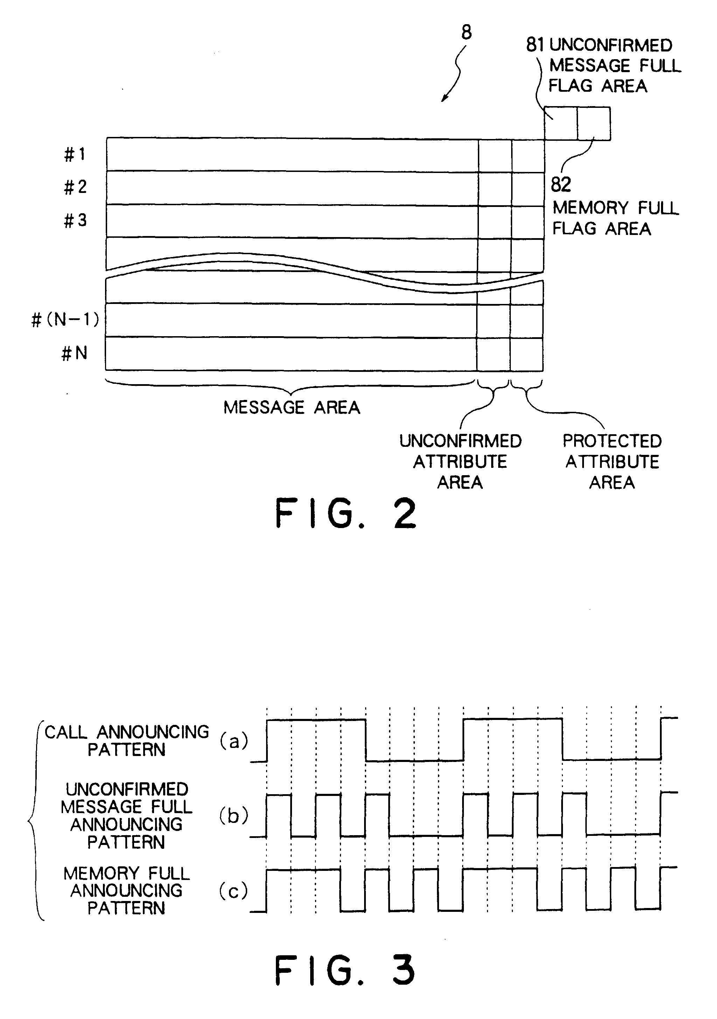

In the call announcing operation, the CPU 6 at first makes the received message be stored in one of message areas (Fig. 2) of a message memory 8 of, for example, an RAM in the manner which will later be described. In this event, in response to a control signal received from the ROM 7 in which an operation program is installed, the CPU 6 checks a storage condition of the message areas of the message memory 8 and classifies the contents of the message areas of the message memory 8 into protected messages, confirmed messages, and unconfirmed messages. Detecting that the message memory 8 is entirely filled with the messages (namely, the message memory 8 is in a message full condition) and that all messages except the protected messages are the unconfirmed messages, the CPU 6 sets an unconfirmed message full flag in an unconfirmed message flag area 81 (Fig. 2) of the message memory 8.

In Fig. 2, each of the protected messages is memorized in the message area with a protected attribute set in a protected attribute area corresponding to the message area in question. Each of the unconfirmed messages is memorized in the message area with an unconfirmed attribute set in an unconfirmed attribute area corresponding to the message area under consideration. Each of the confirmed messages is memorized in the message area with the unconfirmed attribute removed from the unconfirmed attribute area corresponding to the message area in question.

In Fig. 1, after classifying the contents of the message areas of the message memory 8, the CPU 6 controls an LED driver or driving circuit 11 to make an LED (light emitting diode) 12 start intermittent emission of light. Simultaneously, the CPU 6 controls a loudspeaker driver or driving circuit 13 to make a loudspeaker 14 start generation of an audible tone. Alternatively, the CPU 6 controls a vibrator driver or driving circuit 17 to start vibration by a vibrator 18. In addition, the radio paging receiver has a display function. Simultaneously with a call announcement carried out by the LED 12, the loudspeaker 14, and the vibrator 18, the CPU 6 controls an LCD driver or driving circuit 15 to make an LCD (liquid crystal display panel) 16 display the received message. Thus, the call announcement is also carried out by LCD display.

Detecting that the unconfirmed message full flag is set in the unconfirmed message full flag area 81 (Fig. 2) of the message memory 8 after the call announcement is carried out, the CPU 6 makes each of the LED 12, the loudspeaker 14, the LCD 16, and the vibrator 18 carry out, after the call announcement, an unconfirmed message full announcement of a different announcing pattern different from that of the call announcement.

When a keyboard 10 is operated during the call announcement to input a stop instruction into the CPU 6 for the purpose of message confirmation, the CPU 6 stops the call announcing operation and simultaneously removes the unconfirmed attribute for the received message from the message memory 8. The received message in the message memory 8 is thereby changed into the confirmed message. In addition, the unconfirmed message full flag is removed from the unconfirmed message full flag area 81 (Fig. 2) of the message memory 8.

Thereafter, when the message confirming operation is carried out by the use of the keyboard 10 for another received message, the CPU 6 takes in the received message from the message memory 8 and drives the LCD driver 15 to make the LCD 16 display the received message. At this time, the CPU 6 removes the unconfirmed attribute and the unconfirmed message full flag from the message memory 8.

When a protecting operation is carried out to input a protection instruction into the CPU 6 by the use of the keyboard 10, the CPU 6 imparts the protected attribute to a particular message among the messages stored in the message memory 8 that is designated by the protection instruction. Such message is protected as a protected message which is not automatically erased from the message memory 8.

On the other hand, when an erasing operation is carried out to input an erasing instruction into the CPU 6 by the use of the keyboard 10, the CPU 6 erases the messages from the message memory 8 in a reception order in which the messages are received.

Turning to Fig. 3, description will be made as regards announcing patterns in the radio paging receiver of Fig. 1.

A call announcing pattern (a) for the call announcement has an announcement state of a time interval of four times a unit time and an announcement interruption state of the time interval of four times the unit time. The announcement state and the announcement interruption state periodically appears in the call announcing pattern at a period of eight times the unit time.

On the other hand, an unconfirmed message full announcing pattern (b) has a first announcement state of a time interval of the unit time, a first announcement interruption state of the time interval of the unit time, a second announcement state of the time interval of the unit time, a second announcement interruption state of the time interval of the unit time, a third announcement state of the time interval of the unit time, and a third announcement interruption state of another time interval of three times the unit time. The first through the third announcement states and the first through the third announcement interruption states periodically appears in the unconfirmed message full announcing pattern at the period of eight times the unit time.

In Fig. 1, when the message memory 8 is filled with the unconfirmed messages except the protected messages as a consequence of reception of new messages, the radio paging receiver carries out, following the call announcement, the confirmed message full announcement having a clearly distinguishable announcing pattern. Accordingly, the possessor of the radio paging receiver can clearly recognize the confirmed message full announcement so that the received message is inhibited from being erased before it is confirmed.

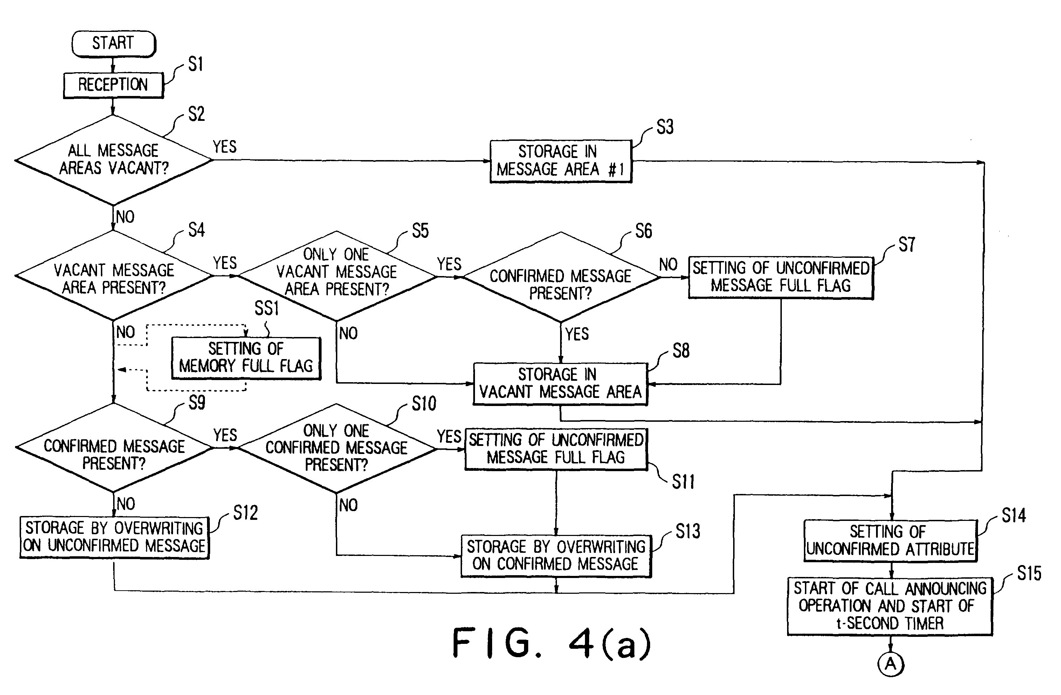

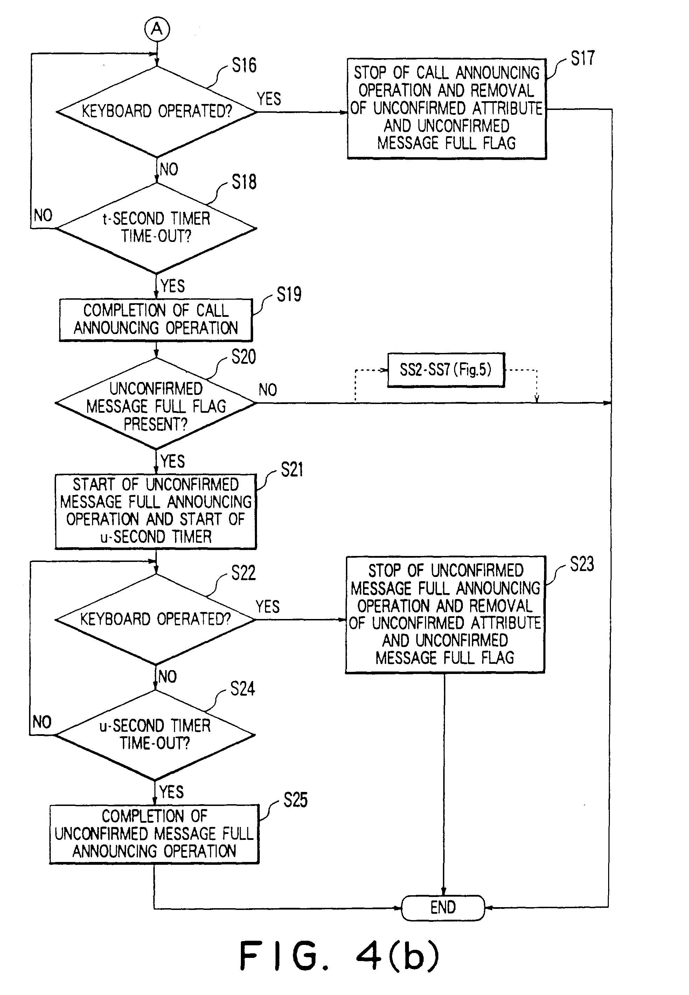

Turning to Fig. 4, operation of the radio paging receiver of Fig. 1 will be described more in detail.

When a message destined to the receiver is received as a received message (Step S1), the CPU 6 of the radio paging receiver detects, before storage of the reception message in the message memory 8, whether or not all message areas of the message memory 8 are vacant (or null) (Step S2). Detecting that all message areas of the message memory 8 are vacant (YES in Step S2), the CPU 6 makes the received message be stored in the message area having a memory number #1 (Step S3).

When it is detected in Step S2 that all message areas of the message memory 8 are not vacant (NO in Step S2), the CPU 6 then detects whether or not at least one vacant message area is present in the message memory 8 (Step S4). Upon detecting that at least one vacant message area is present in the message memory 8 (YES in Step S4), the CPU 6 then detects whether or not only one vacant message area is present in the message memory 8 (Step S5). Detecting that only one vacant area is present in the message memory 8 (YES in Step S5), the CPU 6 detects whether or not the confirmed message is present in the message memory 8 (Step S6). Detecting that no confirmed message is present in the message memory 8 (NO in Step S6), the CPU 6 sets the unconfirmed message full flag in the unconfirmed message full flag area 81 (Fig. 2) of the message memory 8 (Step S7). Thereafter, the CPU 6 stores the received message in the only one vacant area (Step S8). Likewise, detecting that the confirmed message is present in the message memory 8 (YES in Step S6), the CPU 6 stores the received message in the only one vacant area (Step S8). Detecting that only one vacant message area is not present (that is, a plurality of vacant message areas are present) in the message memory 8 (NO in Step S5), the CPU 6 searches for vacant message areas of the message memory 8 from a newest one in descending order of memory numbers and stores the received message in a first-found one of the vacant message areas (Step S8).

When it is detected in Step S4 that no vacant message area is present in the message memory 8 (NO in Step S4), the CPU 6 then detects whether or not any confirmed message or messages are present in the message memory 8 (Step S9). Detecting that at least one confirmed message is present in the message memory (YES in Step S9), the CPU 6 then detects whether or not only one confirmed message is left in the message memory 8 (Step S10). Detecting that only one confirmed message is left in the message memory 8 (YES in Step S10), the CPU 6 sets the unconfirmed message full flag in the unconfirmed message full flag area 81 of the message memory 8 (Step S11). Thereafter, the CPU 6 makes the confirmed message of the message memory 8 be overwritten by the received message (Step S13).

Likewise, detecting that a plurality of the confirmed messages are left in the message memory 8 (NO in Step S10), the CPU 6 makes one of the confirmed messages of the message memory 8 be overwritten by the received message (Step S13). More specifically, when it is detected in Step S10 that al least two confirmed messages are present among the messages stored in the message memory 8 (NO in Step S10), the CPU 6 searches for the message areas of the message memory 8 from the newest one in descending order of memory numbers. The received message is overwritten on a first-found one of the confirmed messages (Step S13). Herein, unprotected messages are searched by discriminating between presence and absence of the protected attribute which has been set in the message memory 8 during the protecting operation through the keyboard 10.

When it is detected in Step S9 that no confirmed message is present in the message areas of the message memory 8 (NO in Step S9), the CPU 6 searches for the message areas of the message memory 8 from the newest one in descending order of the memory numbers. The received message is overwritten on the first-found one of the unconfirmed messages which are unprotected (Step S12).

After the received message is stored in the message memory 8 at Steps S3, S8, S12, and S13, the CPU 6 sets the unconfirmed attribute in the message area storing the received message (Step S14). The CPU 6 starts the call announcing operation and starts an internal timer (t-second timer) for measuring a time instant when the call announcing operation is completed (Step S15).

After Step S15, the CPU 6 detects whether or not a message confirming operation is carried out through the keyboard 10 during the call announcing operation (Step S16). In presence of the operation (YES in Step S16), the call announcing operation is stopped or interrupted and the unconfirmed attribute for the received message and the unconfirmed message full flag are removed from the message memory 8 (Step S17). In absence of the message confirming operation through the keyboard 10 during the call announcing operation in Step S16 (NO in Step S16), the CPU 6 detects whether or not the t-second timer is timed out (Step S18). When no time-out is detected (NO in Step S18), operation returns to Step S16. On the other hand, when the t-second timer is timed out (YES in Step S18), the CPU 6 stops the call announcing operation (Step S19).

After completion of the call announcement at Step S19, the CPU 6 detects whether or not the unconfirmed message full flag is present in the message memory 8 (Step S20). In presence, an unconfirmed message full announcing operation is started and an internal u-second timer for measuring a time instant when the unconfirmed message full announcing operation is completed (Step S21). The CPU 6 detects whether or not the message confirming operation is carried out through the keyboard 10 during the unconfirmed message full announcing operation (Step S22). In presence of the operation (YES in Step S22), the unconfirmed message full announcing operation is stopped or interrupted and the unconfirmed attribute for the received message and the unconfirmed message full flag are removed from the message memory 8 (Step S23).

Detecting that no message confirming operation is carried out through the keyboard 10 during the unconfirmed message full announcing operation in Step S21 (NO in Step S22), the CPU 6 then detects whether or not the u-second timer is timed out (Step S24). When no time-out is detected (NO in Step S24), the operation returns to Step S22. On the other hand, when the u-second timer is timed out (YES in Step S24), the CPU 6 makes the unconfirmed message full announcing operation be finished (Step S25). When Step S17, NO in Step S20, Step S23, and Step S25 are completed, the announcing operation of the radio paging receiver is completed.

In the above-mentioned radio paging receiver, a memory full flag may be set in a memory full flag area 82 (Fig. 2) of the message memory 8 at Step SS1 when it is detected that no vacant message area is present in the message memory 8 in Step S4 of the flow chart in Fig. 4 (NO in Step S4).

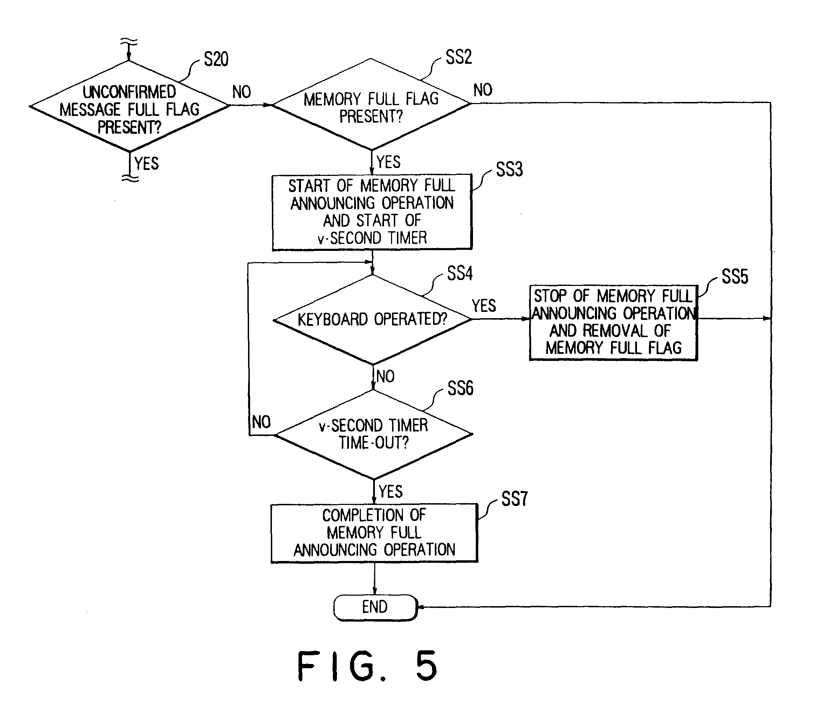

In this event, the CPU 6 carries out a message full announcing operation in the manner illustrated in Fig. 5. In Figs. 2 and 5, detecting that no unconfirmed message full flag is present at Step S20 (NO in Step 20), the CPU 6 detects whether or not the memory full flag is present in the memory full flag area 82 (Fig. 2) of the message memory 8 (Step SS2). In presence, the memory full announcing operation due to a memory full announcing pattern (c) of Fig. 3 is started and an internal v-second timer for measuring a time instant when the memory full announcing operation is completed (Step SS3). The CPU 6 detects whether or not the keyboard 10 is operated during the memory full announcing operation (Step SS4). When the keyboard 10 is operated (YES in Step SS4), the memory full announcing operation is stopped or interrupted and the memory full flag is removed from the message memory 8 (Step SS5).

When the keyboard 10 is not operated during the memory full announcing operation in Step SS3 (NO in Step SS4), the CPU 6 then detects whether or not the v-second timer is timed out (Step SS6). When no time-out is detected (NO in Step SS6), the operation returns to Step SS4. On the other hand, when the v-second timer is timed out (YES in Step SS6), the CPU 6 makes the memory full announcing operation be finished (Step SS7). When Step SS7, NO in Step SS2, and Step SS5 are completed, the memory full announcing operation of the radio paging receiver is completed.

Summarizing in Figs. 1 and 4, a receiving section (1-6, 9, S1) receives a radio signal comprising a message and destined to the receiver and for producing the message as a received signal. A storing section (6, S3, S8, S12-S14) stores the received message in one of message areas of a message memory (8) as an unconfirmed message. An announcing section (11-18, S15) carries out a call announcement in response to the received message. An instruction producing section (10) produces an announcement stop instruction. Connected to the announcing section and the instruction producing section, a first detecting section (6, S16, S18) detects whether or not the announcing stop instruction is received within a predetermined time interval from a first time instant at which the announcing section begins to carry out the call announcement. Connected to the announcing section and the first detecting section, a first control section (6, S17) controls, when the first detecting section detects that the announcement stop instruction is received within the predetermined time interval, the announcing section and the message memory so that the announcing section stops the call announcement and that the message memory memorizes the received message in the above-mentioned one of the message areas as a confirmed message instead of the unconfirmed message.

Connected to the message memory and the first detecting section, a second detecting section (6, S20) detects that each of the message areas is filled with the unconfirmed message when the first detecting section does not detect that the announcing stop instruction is received within the predetermined time interval. Connected to the announcing section and the second detecting section, a second control section (6, S21) controls, when the second detecting section detects that each of the message areas is filled with the unconfirmed message, the announcing section to make the announcing section announce an unconfirmed message full announcement instead of the call announcement. The unconfirmed message full announcement has a different announcing pattern which is different from that of the call announcement.

Connected to the announcing section and the instruction producing section, a third detecting section (6, S22, S24) detects whether or not the announcement stop instruction is received within a preselected time interval from a second time instant at which the announcing section begins to announce the unconfirmed message full announcement instead of the call announcement. Connected to the announcing section and the third detecting section, a third control section (6, S23, S25) controls, when the third detecting section detects that the announcement stop instruction is received within the preselected time interval, the announcing section so that the announcing section stops the unconfirmed message full announcement and that the message memory memorizes the received message in the above-mentioned one of the message areas as the confirmed message instead of the unconfirmed message. When the third detecting section does not detect that the announcing stop instruction is received within the preselected time interval, the third control section controls the announcing section so that the announcing section stops the unconfirmed message full announcement.

The above-mentioned one of the message areas is selected from the message areas except unconfirmed message areas in which other unconfirmed messages are stored.

It will be supposed that the message memory has, among the message areas, a protected message area in which another confirmed message is stored as a protected message which is protected from overwriting thereon. In this case, the second detecting section detects that the message areas are filled with the unconfirmed message except the protected message when the first detecting section does not detect the announcing stop instruction is received within the predetermined time interval. When the second detecting section detects that the message areas are filled with the unconfirmed message except the protected message, the second control section controls the announcing section to make the announcing section announce the unconfirmed message full announcement instead of the call announcement. In this case, the above-mentioned one of the message areas is selected from the message areas except the protected message area and the unconfirmed message areas.

## Claims

1. A radio paging receiver comprising: receiving means (1-6, 9, S1) for receiving a radio signal comprising a message and destined to said receiver and for producing said message as a received message; a message memory (8) having a plurality of message areas; storing means (6, S3, S8, S12-S14) for storing said received message in one of said message areas as an unconfirmed message; announcing means (11-18, S15) for carrying out a call announcement in response to said received message to announce reception of said received message; instruction producing means (10) for producing an announcement stop instruction; first detecting means (6, S16, S18) connected to said announcing means and said instruction producing means for detecting whether or not said announcement stop instruction is received within a predetermined time interval from a first time instant at which said announcing means begins to carry out said call announcement; and first control means (6, S17) connected to said announcing means and said first detecting means for controlling, when said first detecting means detects that said announcement stop instruction is received within said predetermined time interval, said announcing means and said message memory so that said announcing means stops said call announcement and that said message memory memorizes said received message in said one of the message areas as a confirmed message instead of said unconfirmed message, characterized by:
second detecting means (6, S20) connected to said message memory and said first detecting means for detecting that each of said message areas is filled with said unconfirmed message when said first detecting means does not detect that said announcing stop instruction is received within said predetermined time interval; and
second control means (6, S21) connected to said announcing means and said second detecting means for controlling, when said second detecting means detects that each of said message areas is filled with said unconfirmed message, said announcing means to make said announcing means announce an unconfirmed message full announcement instead of said call announcement, said unconfirmed message full announcement having a different announcing pattern which is different from that of said call announcement.

2. A radio paging receiver as claimed in Claim 1, characterized by:
third detecting means (6, S22, S24) connected to said announcing means and said instruction producing means for detecting whether or not said announcement stop instruction is received within a preselected time interval from a second time instant at which said announcing means begins to announce said unconfirmed message full announcement instead of said call announcement; and
third control means (6, S23, S25) connected to said announcing means and said third detecting means for controlling, when said third detecting means detects that said announcement stop instruction is received within said preselected time interval, said announcing means so that said announcing means stops said unconfirmed message full announcement and that said message memory memorizes said received message in said one of the message areas as said confirmed message instead of said unconfirmed message, said third control means controlling, when said third detecting means does not detect that said announcing stop instruction is received within said preselected time interval, said announcing means so that said announcing means stops said unconfirmed message full announcement.

3. A radio paging receiver as claimed in Claim 1, characterized in that said announcing means is a loudspeaker (14).

4. A radio paging receiver as claimed in Claim 1, characterized in that said announcing means is a light emitting diode (12).

5. A radio paging receiver as claimed in Claim 1, characterized in that said announcing means is a vibrator (18).

6. A radio paging receiver as claimed in Claim 1, characterized in that said announcing means is a liquid crystal display panel (16).

7. A radio paging receiver as claimed in Claim 1, characterized in that said one of the message areas is selected from the message areas except unconfirmed message areas in which other unconfirmed messages are stored.

8. A radio paging receiver as claimed in Claim 1, said message memory having, among said message areas, a protected message area in which another confirmed message is stored as a protected message which is protected from overwriting thereon, characterized in that:
said second detecting means detects that said message areas are filled with said unconfirmed message except said protected message when said first detecting means does not detect said announcing stop instruction is received within said predetermined time interval;
said second control means controlling, when said second detecting means detects that said message areas are filled with said unconfirmed message except said protected message, said announcing means to make said announcing means announce said unconfirmed message full announcement instead of said call announcement.

9. A radio paging receiver as claimed in Claim 8, characterized by:
third detecting means (6, S22, S24) connected to said announcing means and said instruction producing means for detecting whether or not said announcement stop instruction is received within a preselected time interval from a second time instant at which said announcing means begins to announce said unconfirmed message full announcement instead of said call announcement; and
third control means (6, S23, S25) connected to said announcing means and said third detecting means for controlling, when said third detecting means detects that said announcement stop instruction is received within said preselected time interval, said announcing means so that said announcing means stops said unconfirmed message full announcement and that said message memory memorize said received message in said one of the message areas as said confirmed message instead of said unconfirmed message, said third control means controlling, when said third detecting means does not detect that said announcing stop instruction is received within said preselected time interval, said announcing means so that said announcing means stops said unconfirmed message full announcement.

10. A radio paging receiver as claimed in Claim 8, characterized in that said one of the message areas is selected from the message areas except said protected message area and unconfirmed message areas in which other unconfirmed messages are stored.

## Patentansprüche

1. Funkempfänger mit Empfangseinrichtungen (1-6, 9, S1) zum Empfang eines eine Nachricht umfassenden und für den Empfänger bestimmten Funksignals sowie zur Meldung der Nachricht als eingegangene Nachricht; einem Nachrichtenspeicher (8) mit einer Mehrzahl von Nachrichten-Speicherbereichen; Speichereinrichtungen (6, S3, S8, S12-S14) zum Speichern der eingegangenen Nachricht in einem der Nachrichten-Speicherbereiche als ungelesene Nachricht; einer Anzeigeeinrichtung (11-18, S15) zum Herstellen einer Rufankündigung als Antwort auf die empfangene Nachricht zur Anzeige des Eingangs der empfangenen Nachricht; einer befehlbildenden Einrichtung (10) zur Erzeugung eines Anzeige-Stopp-Befehls; einer mit der Anzeigeeinrichtung und der befehlbildenden Einrichtung in Verbindung stehenden ersten Detektoreinrichtung (6, S16, S18) zur Erfassung, ob der Anzeige-Stopp-Befehl innerhalb einer vorgegebenen Zeitspanne ab einem ersten Zeitpunkt, an dem die Anzeigeeinrichtung mit der Ausgabe der Rufankündigung beginnt, ausgeführt wurde oder nicht; und einer mit der Anzeigeeinrichtung und der ersten Detektoreinrichtung verbundenen Steuereinrichtung (6, S17) zur Steuerung der Anzeigeeinrichtung und des Nachrichtenspeichers bei Feststellung durch die erste Detektoreinrichtung, dass der Anzeige-Stopp-Befehl innerhalb der vorgegebenen Zeitspanne empfangen wurde, in der Weise, dass die Anzeigeeinrichtung die Rufankündigung stoppt und der Nachrichtenspeicher die empfangene Nachricht in einem der Nachrichten-Speicherbereiche als bestätigte Nachricht statt der unbestätigten Nachricht abspeichert; gekennzeichnet durch eine mit dem Nachrichtenspeicher und der ersten Detektoreinrichtung verbundene zweite Detektoreinrichtung (6, S20) zur Erfassung, dass jeder der Nachrichtenbereiche mit einer unbestätigten Nachricht besetzt ist, wenn durch die erste Detektoreinrichtung nicht festgestellt wird, dass der Anzeige-Stopp-Befehl innerhalb der vorgegebenen Zeitspanne empfangen wurde; und
eine zweite mit der Anzeigeeinrichtung und der zweiten Detektoreinrichtung verbundene zweite Steuereinrichtung (6, S21) zur Steuerung der Anzeigeeinrichtung bei Feststellung durch die zweite Detektoreinrichtung, dass jeder der Nachrichten-Speicherbereiche mit einer unbestätigten Nachricht besetzt ist, in der Weise, dass die Anzeigeeinrichtung statt der Rufankündigung die Meldung ausgibt, dass der Speicher für unbestätigte Nachrichten voll ist, wobei das Muster dieser Anzeige des für unbestätigte Nachrichten vollen Speicherzustandes von dem der Rufankündigung verschieden ist.

2. Funkempfänger nach Anspruch 1, gekennzeichnet durch eine mit der Anzeigeeinrichtung und der befehlbildenen Einrichtung verbundene dritte Detektoreinrichtung (6, S22, S24) zur Erfassung, ob der Anzeige-Stopp-Befehl innerhalb einer vorgegebenen Zeitspanne ab einem zweiten Zeitpunkt, an dem die Anzeigeeinrichtung mit der Ausgabe der den vollen Zustand des Speichers für unbestätigte Nachrichten anzeigenden Meldung statt der Rufankündigung beginnt, ausgeführt wurde oder nicht; und eine mit der Anzeigeeinrichtung und der dritten Detektoreinrichtung verbundene dritte Steuereinrichtung (6, S23, S25) zur Steuerung der Anzeigeeinrichtung bei Feststellung durch die dritte Detektoreinrichtung, dass der Anzeige-Stopp-Befehl innerhalb der vorgegebenen Zeitspanne empfangen wurde, in der Weise, dass die Anzeigeeinrichtung die Meldung über den vollen Zustand des Speichers für unbestätigte Nachrichten beendet und der Nachrichtenspeicher die eingegangene Nachricht in einem der Speicherbereiche als bestätigte Nachricht statt der unbestätigten abspeichert, wobei die dritte Steuereinrichtung die Anzeigeeinrichtung so steuert, dass diese die Meldung des für unbestätigte Nachrichten vollen Speicherzustandes beendet, wenn die dritte Detektoreinrichtung nicht feststellt, dass der Anzeige-Stopp-Befehl innerhalb der vorgegebenen Zeitspanne eingegangen ist.

3. Funkempfänger nach Anspruch 1, dadurch gekennzeichnet, dass die Anzeigeeinrichtung aus einem Lautsprecher (4) besteht.

4. Funkempfänger nach Anspruch 1, dadurch gekennzeichnet, dass die Anzeigeeinrichtung in Form einer Leuchtdiode (12) vorgesehen ist.

5. Funkempfänger nach Anspruch 1, dadurch gekennzeichnet, dass die Anzeigeeinrichtung aus einem Schwingungserreger (18) besteht.

6. Funkempfänger nach Anspruch 1, dadurch gekennzeichnet, dass es sich bei der Anzeigeeinrichtung um ein Flüssigkristall-Anzeigefeld (16) handelt.

7. Funkempfänger nach Anspruch 1, dadurch gekennzeichnet, dass der eine der Nachrichten-Speicherbereiche aus allen Bereichen ausser Bereichen für unbestätigte Nachrichten, in denen andere unbestätigte Nachrichten gespeichert sind, auswählbar ist.

8. Funkempfänger nach Anspruch 1; dessen Nachrichtenspeicher ausser den genannten Nachrichten-Speicherbereichen noch einen Bereich für eine geschützte Nachricht aufweist, in dem eine weitere bestätigte Nachricht als geschützte Nachricht abgespeichert ist, die nicht überschrieben werden kann, dadurch gekennzeichnet,
dass die zweite Detektoreinrichtung erfasst, dass die Speicherbereiche mit unbestätigten Nachrichten, ausgenommen die geschützte Nachricht, besetzt sind, wenn die erste Detektoreinrichtung nicht feststellt, dass der Anzeige-Stopp-Befehl innerhalb der vorgegebenen Zeitspanne empfangen wurde; und
dass die zweite Steuereinrichtung die Anzeigeeinrichtung bei Feststellung durch die zweite Detektoreinrichtung, dass die Nachrichten-Speicherbereiche mit den unbestätigten Nachrichten, ausgenommen die geschützte Nachricht, besetzt sind, so steuert, dass die Anzeigeeinrichtung statt der Rufankündigung die Meldung über den vollen Zustand des Speichers für unbestätigte Nachrichten ausgibt.

9. Funkempfänger nach Anspruch 8, gekennzeichnet durch
eine mit der Anzeigeeinrichtung und der befehlbildenden Einrichtung verbundene dritte Detektoreinrichtung (6, S22, S24) zur Erfassung, ob der Anzeige-Stopp-Befehl innerhalb einer vorgegebenen Zeitspanne ab einem zweiten Zeitpunkt, an dem die Anzeigeeinrichtung mit der Ausgabe der Meldung über den vollen Zustand des Speichers für unbestätigte Nachrichten statt der Rufankündigung beginnt, empfangen wurde oder nicht; und
eine mit der Anzeigeeinrichtung und der dritten Detektoreinrichtung verbundene dritte Steuereinrichtung (6, S23, S25), welche die Anzeigeeinrichtung bei Feststellung durch die dritte Detektoreinrichtung, dass der Anzeige-Stopp-Befehl innerhalb der vorgegebenen Zeitspanne eingegangen ist, so steuert, dass die Anzeigeeinrichtung die Meldung, dass der Speicher für unbestätigte Nachrichten voll ist, beendet und der Nachrichtenspeicher die empfangene Nachricht als bestätigte Nachricht statt der unbestätigten Nachricht in einem der Nachrichtenspeicherbereiche speichert, wobei die dritte Steuereinrichtung die Anzeigeeinrichtung bei Nichtfeststellung durch die dritte Detektoreinrichtung, dass der Anzeige-Stopp-Befehl innerhalb der vorgegebenen Zeitspanne empfangen wurde, in der Weise steuert, dass die Anzeigeeinrichtung die Meldung über den vollen Zustand des Speichers für unbestätigte Nachrichten beendet.

10. Funkempfänger nach Anspruch 8, dadurch gekennzeichnet, dass der eine der Nachrichten-Speicherbereiche aus allen Bereichen ausser dem Bereich für die geschützte Nachricht sowie ausser den Speicherbereichen für unbestätigte Nachrichten, in denen andere unbestätigte Nachrichten gespeichert sind, auswählbar ist.

## Revendications

1. Récepteur d'appel radio comprenant : des moyens de réception (1-6, 9, S1) pour recevoir un signal radio comprenant un message et destiné audit récepteur et pour produire ledit message comme un message reçu; une mémoire de messages (8) ayant une pluralité de zones de messages; des moyens de stockage (6, S3, S8, S12-S14) pour stocker ledit message reçu dans l'une desdites zones de messages comme un message non confirmé; des moyens d'annonce (11-18, S15) pour effectuer une annonce d'appel en réponse audit message reçu pour annoncer la réception dudit message reçu; des moyens de production d'instructions (10) pour produire une instruction d'arrêt d'annonce; des premiers moyens de détection (6, S16, S18) connectés auxdits moyens d'annonce et auxdits moyens de production d'instructions pour détecter si oui ou non ladite instruction d'arrêt d'annonce a été reçue dans la limite d'un intervalle de temps prédéterminé à partir d'un premier instant où lesdits moyens d'annonce commencent à effectuer ladite annonce d'appel; et des premiers moyens de commande (6, S17) connectés auxdits moyens d'annonce et auxdits premiers moyens de détection pour commander, quand lesdits premiers moyens de détection détectent que ladite instruction d'arrêt d'annonce a été reçue dans la limite dudit intervalle de temps prédéterminé, lesdits moyens d'annonce et ladite mémoire de messages de sorte que lesdits moyens d'annonce arrêtent ladite annonce d'appel et que ladite mémoire de messages mémorise ledit message reçu dans ladite une zone des zones de messages comme un message confirmé au lieu dudit message non confirmé; caractérisé par :
des deuxièmes moyens de détection (6, S20) connectés à ladite mémoire de messages et auxdits premiers moyens de détection pour détecter que chacune desdites zones de messages est remplie avec ledit message non confirmé quand lesdits premiers moyens de détection ne détectent pas que ladite instruction d'arrêt d'annonce a été reçue dans la limite dudit intervalle de temps prédéterminé; et
des deuxièmes moyens de commande (6, S21) connectés auxdits moyens d'annonce et auxdits deuxièmes moyens de détection pour commander, quand lesdits deuxièmes moyens de détection détectent que chacune desdites zones de messages est remplie avec ledit message non confirmé, lesdits moyens d'annonce pour amener lesdits moyens d'annonce à annoncer une annonce de messages non confirmés pleins au lieu de ladite annonce d'appel, ladite annonce de messages non confirmés pleins ayant une structure d'annonce différente qui diffère de celle de ladite annonce d'appel.

2. Récepteur d'appel radio selon la revendication 1, caractérisé par :
des troisièmes moyens de détection (6, S22, S24) connectés auxdits moyens d'annonce et auxdits moyens de production d'instructions pour détecter si oui ou non ladite instruction d'arrêt d'annonce a été reçue dans la limite d'un intervalle de temps présélectionné à partir d'un deuxième instant où lesdits moyens d'annonce commencent à annoncer ladite annonce de messages non confirmés pleins au lieu de ladite annonce d'appel; et
des troisièmes moyens de commande (6, S23, S25) connectés auxdits moyens d'annonce et auxdits troisièmes moyens de détection pour commander, quand lesdits troisièmes moyens de détection détectent que ladite instruction d'arrêt d'annonce a été reçue dans la limite dudit intervalle de temps présélectionné, lesdits moyens d'annonce de sorte que lesdits moyens d'annonce arrêtent ladite annonce de messages non confirmés pleins et que ladite mémoire de messages mémorise ledit message reçu dans ladite une zone des zones de messages comme ledit message confirmé au lieu dudit message non confirmé, lesdits troisièmes moyens de commande commandant, quand lesdits troisièmes moyens de détection ne détectent pas que ladite instruction d'arrêt d'annonce a été reçue dans la limite dudit intervalle de temps présélectionné, lesdits moyens d'annonce de sorte que lesdits moyens d'annonce arrêtent ladite annonce de messages non confirmés pleins.

3. Récepteur d'appel radio selon la revendication 1, caractérisé en ce que lesdits moyens d'annonce sont un haut-parleur (14).

4. Récepteur d'appel radio selon la revendication 1, caractérisé en ce que lesdits moyens d'annonce sont une diode électroluminescente (12).

5. Récepteur d'appel radio selon la revendication 1, caractérisé en ce que lesdits moyens d'annonce sont un vibreur (18).

6. Récepteur d'appel radio selon la revendication 1, caractérisé en ce que lesdits moyens d'annonce sont un panneau d'affichage à cristaux liquides (16).

7. Récepteur d'appel radio selon la revendication 1, caractérisé en ce que ladite une zone des zones de messages est sélectionnée parmi les zones de messages, excepté les zones de messages non confirmés, dans lesquelles d'autres messages non confirmés sont stockés.

8. Récepteur d'appel radio selon la revendication 1, ladite mémoire de messages ayant, parmi lesdites zones de messages, une zone de message protégé dans laquelle un autre message confirmé est stocké comme un message protégé qui est protégé contre l'écrasement, caractérisé en ce que :
lesdits deuxièmes moyens de détection détectent que lesdites zones de message sont remplies avec ledit message non confirmé, excepté ledit message protégé, quand lesdits premiers moyens de détection ne détectent pas que ladite instruction d'arrêt d'annonce a été reçue dans la limite dudit intervalle de temps prédéterminé;
lesdits deuxièmes moyens de commande commandant, quand lesdits deuxièmes moyens de détection détectent que lesdites zones de messages sont remplies avec ledit message non confirmé, excepté ledit message protégé, lesdits moyens d'annonce pour amener lesdits moyens d'annonce à annoncer ladite annonce de messages non confirmés pleins au lieu de ladite annonce d'appel.

9. Récepteur d'appel radio selon la revendication 8, caractérisé par :
des troisièmes moyens de détection (6, S22, S24) connectés auxdits moyens d'annonce et auxdits moyens de production d'instructions pour détecter si oui ou non ladite instruction d'arrêt d'annonce a été reçue dans la limite d'un intervalle de temps présélectionné à partir d'un deuxième instant où lesdits moyens d'annonce commencent à annoncer ladite annonce de messages non confirmés pleins au lieu de ladite annonce d'appel; et
des troisièmes moyens de commande (6, S23, S25) connectés auxdits moyens d'annonce et auxdits troisièmes moyens de détection pour commander, quand lesdits troisièmes moyens de détection détectent que ladite instruction d'arrêt d'annonce a été reçue dans la limite dudit intervalle de temps présélectionné, lesdits moyens d'annonce de sorte que lesdits moyens d'annonce arrêtent ladite annonce de messages non confirmés pleins et que ladite mémoire de messages mémorise ledit message reçu dans ladite une zone des zones de messages comme ledit message confirmé au lieu dudit message non confirmé, lesdits troisièmes moyens de commande commandant, quand lesdits troisièmes moyens de détection ne détectent pas que ladite instruction d'arrêt d'annonce a été reçue dans la limite dudit intervalle de temps présélectionné, lesdits moyens d'annonce de sorte que lesdits moyens d'annonce arrêtent ladite annonce de messages non confirmés pleins.

10. Récepteur d'appel radio selon la revendication 8, caractérisé en ce que ladite une zone des zones de messages est sélectionnée parmi les zones de messages, excepté ladite zone de message protégé, et les zones de messages non confirmés dans lesquelles d'autres messages non confirmés sont stockés.
